(19) **Europäisches Patentamt European Patent Office Office européen des brevets**

(11) **EP 4 068 724 B1**

(12) **FASCICULE DE BREVET EUROPEEN**

(45) Date de publication et mention
de la délivrance du brevet:
**15.10.2025 Bulletin 2025/42**

(21) Numéro de dépôt: **21305423.2**

(22) Date de dépôt: **01.04.2021**

(51) Classification Internationale des Brevets (IPC):
***H04L 9/40*** *(2022.01)*

(52) Classification Coopérative des Brevets (CPC):
**H04L 63/1425**

(54) **PROCÉDÉ DE DÉTECTION D'ANOMALIES DANS UN SYSTÈME D'INFORMATION, PROGRAMME INFORMATIQUE ET SYSTÈME DE DÉTECTION D'ANOMALIES METTANT EN OEUVRE UN TEL PROCÉDÉ**

VERFAHREN ZUR ERKENNUNG VON ANOMALIEN IN EINEM INFORMATIONSSYSTEM, COMPUTERPROGRAMM UND SYSTEM ZUR ERKENNUNG VON ANOMALIEN, DAS EIN SOLCHES VERFAHREN VERWENDET

METHOD FOR DETECTING ANOMALIES IN AN INFORMATION SYSTEM, COMPUTER PROGRAM AND SYSTEM FOR DETECTING ANOMALIES IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**05.10.2022 Bulletin 2022/40**

(73) Titulaire: **Bull SAS
78340 Les Clayes-sous-Bois (FR)**

(72) Inventeurs:
• **ABOUBACAR ALKA, Mahamadou Salissou
78200 MANTES-LA-JOLIE (FR)**
• **GUEDOU, Béranger
78200 MANTES-LA-JOLIE (FR)**

(74) Mandataire: **IPAZ
Bâtiment Platon
Parc Les Algorithmes
91190 Saint-Aubin (FR)**

(56) Documents cités:
**US-A1- 2005 125 710**

• **JMILA HOUDA ET AL: "Siamese Network Based Feature Learning for Improved Intrusion Detection", 9 December 2019, ADVANCES IN INTELLIGENT DATA ANALYSIS XIX; [LECTURE NOTES IN COMPUTER SCIENCE; LECT.NOTES COMPUTER], SPRINGER INTERNATIONAL PUBLISHING, CHAM, PAGE(S) 377 - 389, ISBN: 978-3-540-69901-9, ISSN: 0302-9743, XP047532409**

## Description

La présente invention concerne un procédé de détection d'anomalies dans un système d'information comprenant plusieurs entités informatiques. Elle concerne également un programme informatique, un système de détection d'anomalies et un système d'information mettant en œuvre un tel procédé.

Le domaine de l'invention est le domaine de la cybersécurité, et en particulier de la détection d'anomalies, telles que des tentatives d'attaques, dans un système d'information (« SI »).

### État de la technique

La cybersécurité est déjà dotée de différents outils basés sur des règles prédéfinies permettant de détecter des attaques ou tentatives d'attaques visant un SI, en fonction de règles de détection prédéfinies.

Cependant, certaines menaces ne sont pas détectées par les outils existants car ils ne déclenchent pas les conditions des règles des outils existants. Il peut s'agir par exemple d'attaques de type « Advanced Persistent Threat », qui produit des signaux faibles et sur un temps long ou de type « Black swan », qui sont des attaques inconnues et imprévisibles. Le document US 2005/125710, 9 juin 2005 (2005-06-09), décrit un procédé de surveillance de systèmes informatisés ou de processus d'affaires pour détecter des anomalies en créant et mettant à jour une signature du système/processus. Le document JMILA HOUDA ET AL: "Siamese Network Based Feature Learning for Improved Intrusion Détection", 9 décembre 2019 (2019-12-09), ADVANCES IN INTELLIGENT DATA ANALYSIS XIX; [LECTURE NOTES IN COMPUTER SCIENCE; LECT. NOTES COMPUTER], SPRINGER INTERNATIONAL PUBLISHING, CHAM, PAGE(S) 377 - 389, XP047532409, ISSN: 0302-9743, ISBN: 978-3-540-69901-9, [extrait le 2019-12-09] explore l'utilisation des réseaux de neurones siamois pour l'apprentissage des représentations dans le but d'améliorer la détection des intrusions dans les systèmes de cybersécurité.

Un but de la présente invention est de remédier à l'inconvénient précité.

Un autre but de la présente invention est de proposer une solution de détection d'attaques ou de menaces, et plus généralement d'anomalie(s), dans un système d'information, de manière plus efficace.

Un autre but de la présente invention est de proposer une solution de détection d'attaques ou de menaces, et plus généralement d'anomalie(s), au sein d'un système d'information qui est évolutive et qui s'adapte, en particulier de manière autonome, à l'évolution dudit système d'information.

### Exposé de l'invention

L'invention permet d'atteindre au moins l'un de ces buts par un procédé, mis en œuvre par ordinateur, de détection d'anomalies dans un système d'information, SI, comprenant plusieurs entités informatiques, ledit procédé comprenant au moins une itération d'une phase de détection pour au moins une entité dudit SI et pour au moins une fenêtre temporelle, dite unitaire, actuelle, ladite phase de détection comprenant les étapes suivantes :

- collecte de données relatives à une activité de ladite entité pendant ladite fenêtre unitaire actuelle ;
- construction d'un jeu de données, dit observation, associé à ladite fenêtre unitaire actuelle, en fonction de données collectées pendant une fenêtre (W), dite d'observation, comprenant ladite fenêtre unitaire actuelle,
- génération d'une signature numérique, dite signature unitaire, représentative d'un comportement de ladite entité lors de ladite fenêtre unitaire actuelle en fonction de ladite observation ; et
- calcul d'un score d'anomalie, associée à ladite entité pour ladite fenêtre unitaire, en fonction de :

  • ladite signature unitaire, et
  • une signature numérique, dite de référence, préalablement calculée pour ladite entité et représentative de l'activité de ladite entité sur une période (P), dite de référence, en particulier glissante, précédant ladite fenêtre unitaire actuelle(J) ;

caractérisé en ce que chaque signature numérique est générée en utilisant un générateur basé sur des réseaux de neurones siamois à apprentissage profond préalablement entraîné.

Ainsi la solution proposée par la présente invention permet de générer, pour chaque entité et pour chaque fenêtre unitaire, une signature numérique unitaire représentative du comportement de ladite entité sur ladite fenêtre unitaire. Cette signature unitaire est comparée à une signature de référence représentative du comportement moyen de cette entité sur une période de référence, précédant, et en particulier immédiatement, ladite fenêtre unitaire. Il est alors possible de détecter une déviation dans le comportement de l'entité pendant la fenêtre unitaire, en calculant un score d'anomalie entre la signature unitaire et la signature de référence.

De plus, la période de référence est une période, de préférence glissante, qui précède la fenêtre unitaire dans le temps, et en particulier immédiatement, de sorte que la solution proposée par l'invention est évolutive et s'adapte à des changements lents ou progressifs dans le comportement de l'entité informatique.

Par ailleurs, de manière particulièrement avantageuse, l'invention propose d'utiliser des réseaux neuronaux siamois à apprentissage profond pour la génération des signatures, à la fois de la signature unitaire mais aussi pour la signature de référence. L'utilisation de réseaux neuronaux siamois permet une plus grande précision et de robustesse de détection d'anomalies avec un apprentissage moins long, moins lourd, en utilisant moins d'observations pour l'apprentissage. L'utilisation de réseaux neuronaux siamois permet aussi d'obtenir un générateur de signatures qui n'est pas, ou très peu, impacté par l'ajout ou la suppression d'une entité informatique au sein du SI, ce qui évite d'avoir à répéter la phase d'entrainement à chaque ajout ou suppression, ou modification, d'une entité informatique dans le SI.

En outre, le procédé selon l'invention permet de réaliser une détection d'anomalie qui n'est pas limitée à une liste d'anomalie prédéterminée, c'est-à-dire sans avoir à spécifier la ou les anomalies à détecter en amont. Cela permet de détecter un plus large panel d'anomalies. De plus, cela permet de réaliser une détection évolutive qui s'adapte à l'apparition de nouvelles anomalies. Par exemple, le procédé selon l'invention permet de détecter des anomalies qui ne seraient pas connues au moment de l'entrainement des réseaux neuronaux.

En définitive, la solution proposée par la présente invention permet de réaliser une détection d'anomalies au sein d'un SI de manière efficace, plus évolutive, tout en étant plus simple et plus rapide à mettre en œuvre.

La fenêtre unitaire, notée J, peut présenter une durée d'une heure, d'une journée, ou d'une semaine.

La fenêtre d'observation, notée W, peut être égale à la fenêtre unitaire. Préférentiellement, la fenêtre d'observation peut comprendre plusieurs fenêtres unitaires. Plus particulièrement, la fenêtre d'observation peut correspondre à plusieurs fenêtres unitaires. Par exemple, la fenêtre unitaire peut être une journée et la fenêtre d'observation peut correspondre à 7 jours. Dans tous les cas, la fenêtre d'observation comprend et se termine par la fenêtre unitaire actuelle.

La période de référence, noté P, est la période considérée pour définir un comportement moyen de l'entité. Cette période de référence comprend de préférence une multitude de fenêtres unitaires. Elle comprend préférentiellement une multitude de fenêtres d'observation. Dans tous les cas, de préférence, la période de référence est glissante et se termine par la fenêtre unitaire précédant immédiatement la fenêtre actuelle.

Suivant un exemple de réalisation non limitatif, la fenêtre unitaire, notée J, peut être une journée, la fenêtre d'observation, W, peut-être de plusieurs jours, par exemple de 10 jours, et la période de référence, P, par exemple de 90 jours. Dans ce cas, la fenêtre d'observation W comprend 10 fenêtres unitaires, la période de référence P comprend 90 fenêtres unitaires et 81 fenêtres d'observation. Par exemple, en considérant une période d'activité de 100 jours, la fenêtre unitaire actuelle $J_{100}$ est le $100^{\text{ème}}$ jour. Les 9 fenêtres unitaires $J_{99}$-$J_{90}$

précédant immédiatement la fenêtre unitaire actuelle $J_{100}$ forment, avec la fenêtre unitaire actuelle $J_{100}$, la fenêtre d'observation pour générer la signature unitaire actuelle. La période de référence P comprend alors les 90 fenêtres unitaires $J_{99}$-$J_{10}$ précédent immédiatement la fenêtre unitaire actuelle $J_{100}$, et ne comprend pas la fenêtre unitaire actuelle $J_{100}$. La période de référence P comprend 81 fenêtres d'observation : $W_{81}=J_{99}$-$J_{90}$, $W_{80}=J_{98}$-$J_{89}$, $W_{79}=J_{97}$-$J_{88}$, ..., $W_{1}=J_{19}$-$J_{10}$. Bien entendu, il s'agit ici d'un exemple de réalisation non limitatif donné à titre d'illustration seulement.

Le comportement d'une entité informatique d'un SI peut être décrit par l'ensemble des logs applicatifs généré par son activité sur le système d'information.

Au moins un log applicatif peut être constitué par l'entité elle-même, ou une machine, virtuelle ou physique sur laquelle se trouve ladite entité informatique.

Au moins un log applicatif d'une entité informatique peut être constitué par une autre entité du SI, tel que par exemple un serveur ou une passerelle, etc.

Au moins un log applicatif peut être tenu et mis à jour par un outil applicatif présent nativement sur une machine correspondant à ladite entité informatique, ou sur laquelle se trouve ladite entité informatique.

Au moins un log applicatif peut être tenu et mis à jour par un outil applicatif déployé et dédié à cette fonction sur une machine correspondant à ladite entité informatique ou sur laquelle se trouve ladite entité informatique.

Suivant des exemples de réalisation non limitatifs au moins un log applicatif peut être un log provenant de l'Active Directory (AD) de Windows, ou un log provenant d'un proxy se trouvant dans le SI, ou encore d'un serveur de données ou d'applications.

Au moins une entité informatique peut être une machine physique telle qu'un serveur par exemple. Dans ce cas, les données relatives à l'activité de cette entité informatique peuvent être collectées grâce aux logs d'activité tenus par ledit serveur.

Au moins une entité informatique peut être une machine virtuelle exécutée sur une machine physique. Dans ce cas, les données relatives à l'activité de cette entité informatique peuvent être collectées grâce aux logs d'activité tenus par ladite machine virtuelle ou ladite machine physique.

Au moins une entité informatique peut être un compte utilisateur lié à un utilisateur réel. Dans ce cas, les données relatives à l'activité de cette entité informatique peuvent être collectées grâce aux logs de l'AD de Windows s'il s'agit d'un environnement Windows, ou de log de même type dans un autre environnement.

Au moins une entité informatique peut être un compte fonctionnel, tel qu'un compte « administrateur » par exemple pouvant être utilisé par plusieurs utilisateurs réels. Dans ce cas, les données relatives à l'activité de cette entité informatique peuvent être collectées grâce aux logs de l'AD de Windows s'il s'agit d'un environnement Windows.

Comme indiqué plus haut, la période de référence peut de préférence comprendre plusieurs fenêtres unitaires précédant la fenêtre unitaire actuelle.

Dans ce cas, le procédé selon l'invention peut comprendre une étape de génération de la signature de référence comprenant les étapes suivantes :

- pour chaque fenêtre unitaire de la période de référence, génération, par le générateur de signature, d'une signature numérique unitaire en fonction de l'observation associée à ladite fenêtre unitaire, et
- calcul de ladite signature de référence en fonction desdites signatures unitaires générées, en particulier par moyennage desdites signatures unitaires.

Ainsi, la signature de référence représente bien le comportement moyen de l'entité numérique pour la période de référence, ce qui permet de prendre en compte les évolutions dans le temps et les changements ponctuels dans le comportement de l'entité informatique.

La phase de détection peut en outre comprendre une mise à jour de la signature de référence avec la signature unitaire associée à la fenêtre unitaire actuelle, pour une nouvelle itération de ladite phase de détection pour une fenêtre unitaire suivante.

Ainsi, pour la fenêtre unitaire suivante, la signature de référence prend en compte le comportement de l'entité lors de la fenêtre actuelle, ce qui permet de suivre le comportement de l'entité informatique sans discontinuité.

Suivant un mode de réalisation pour une signature unitaire, notée $S_0$, le score d'anomalie, notée $Z_0$, peut être calculé en utilisant la relation suivante :

$$Z_0 = (d_0 - MEAN)/STD$$

avec

- $d_0$ la distance entre la signature de référence, notée $R_0$, et la signature unitaire actuelle $S_0$. Cette distance peut être la distance cosinus, ou tout autre distance indiquant la différence entre la signature $S_0$ et la distance de référence $R_0$ ;
- MEAN la moyenne des distances entre la signature de référence $R_0$ et chaque signature unitaire associée à chaque fenêtre unitaire de ladite période de référence $P_0$ ; et
- STD l'écart type des distances entre la signature de référence $R_0$ et chaque signature unitaire associée à chaque fenêtre unitaire de ladite période de référence $P_0$ ;

Bien entendu, d'autre relations sont possibles mais la relation proposée permet une plus grande efficacité de détection

Suivant un mode de réalisation, la fenêtre d'observation peut être égale à la fenêtre unitaire.

Dans ce cas, l'observation associée à la fenêtre unitaire actuelle est construite en fonction des données collectées uniquement lors de la fenêtre unitaire. Ce mode de réalisation présente l'avantage de donner une représentation du comportement ponctuel de l'entité informatique et permet un suivi plus fin de ce comportement. Il permet de détecter des changements ponctuels et brefs dans le comportement de l'entité informatique.

En particulier, l'observation peut correspondre à un vecteur de plusieurs paramètres comprenant pour chaque paramètre au moins une valeur mesurée pour ce paramètre lors de la fenêtre unitaire pour l'entité informatique. Par exemple, si l'étape de collecte de données réalise une collecte de données concernant 200 paramètres, alors l'observation peut être un vecteur de dimension 200.

Alternativement, la fenêtre d'observation peut être une fenêtre temporelle glissante comprenant la fenêtre unitaire actuelle et au moins une fenêtre unitaire précédant dans le temps, en particulier immédiatement, ladite fenêtre unitaire actuelle.

Dans ce cas, l'observation associée à la fenêtre unitaire actuelle est construite en fonction de données collectées lors desdites fenêtres unitaires. Autrement dit, la signature unitaire associée à la fenêtre unitaire actuelle est générée en fonction de données collectées lors desdites fenêtres unitaires.

Ce mode de réalisation présente l'avantage de donner une représentation du comportement actuel de l'entité informatique pendant la fenêtre unitaire actuelle en combinaison avec le comportement de celle-ci sur au moins une fenêtre unitaire, ce qui permet de modérer des modifications ponctuelles pouvant se produire lors la fenêtre unitaire actuelle.

En particulier, l'observation peut correspondre à une matrice formée par autant de vecteurs qu'il y a de fenêtres unitaires dans la fenêtre d'observation. Par exemple, dans le cas où :

- la fenêtre d'observation comprend sept fenêtres unitaires, et
- l'étape de collecte de données réalise une collecte de données concernant 200 paramètres ;

alors l'observation peut être une matrice de sept vecteurs, chacun de dimension 200.

L'étape de collecte de données peut comprendre une collecte d'une ou plusieurs valeurs pour un ou plusieurs paramètres prédéfinis.

Il est important que chaque paramètre pour lequel des données sont collectées ait un sens métier pour que la signature numérique qui sera ensuite générée en fonction de la valeur de ce paramètre soit utile pour discriminer les comportements de cette entité et détecter un comportement déviant ou anormal par rapport à un comportement moyen sur la période de référence.

L'homme du métier est à même de déterminer quels paramètres doivent être suivis et ont une signification métier.

Suivant des exemples de réalisation non limitatifs, l'étape de collecte de données peut collecter des données pour au moins un des paramètres suivants :

- nombre de login réalisés par l'entité informatique, pendant la fenêtre unitaire ;
- nombre de processus fréquents/peu fréquents exécutés par l'entité informatique, lors de la fenêtre unitaire. Un processus est qualifié de fréquent lorsqu'il fait partie des X, par exemple 5, processus les plus exécutés pendant la période de référence. Un processus est qualifié de peu fréquent lorsqu'il fait partie des Y, par exemple 3, processus les moins exécutés lors de la fenêtre unitaire ;
- nombre d'accès à des hosts fréquents/peu fréquents, réalisés par l'entité lors de la fenêtre unitaire. Un host est qualifié de fréquent, respectivement de peu fréquent, lorsqu'il fait partie des X, par exemple 4, host les plus souvent accédés, respectivement des Y, par exemple 2, host les moins souvent accédés, pendant la période de référence ;
- noms de processus exécutés, transformés à l'aide de méthodes de vectorisation, telle que par exemple tf-idf ;
- chemins vers des fichiers exécutés, transformés à l'aide de méthodes de vectorisation, telle que par exemple comme tf-idf ;
- etc.

Par exemple, les valeurs d'un ou plusieurs de ces paramètres sont disponibles dans les logs d'AD de Windows.

Avantageusement, le procédé selon l'invention peut comprendre une étape d'agrégation, pour au moins un paramètre, de plusieurs valeurs collectées lors de la fenêtre unitaire.

Une telle agrégation peut comprendre un moyennage de plusieurs valeurs collectées pour ce paramètre lors de la fenêtre unitaire.

Suivant une alternative, une telle agrégation peut comprendre une concaténation de plusieurs valeurs collectées pour ce paramètre lors de la fenêtre unitaire.

Alternativement ou en plus, une telle agrégation peut comprendre la détermination d'une valeur en fonction des données collectées, telle que par exemple une fréquence d'occurrence d'une valeur, un écart type, etc.

Par exemple, le paramètre peut comprendre la fréquence d'accès d'une entité à un serveur d'application. Dans ce cas, les logs d'accès comprennent les noms des appareils auxquels l'entité a accédé. Ces valeurs sont alors traitées pour déterminer la fréquence d'occurrence de l'identifiant ou de l'adresse dudit serveur d'application.

Cette étape d'agrégation peut être réalisée de manière progressive lors de l'étape de collecte pendant que les données sont collectées, ou à la fin de l'étape de collecte de données.

Le procédé selon l'invention peut comprendre, préalablement à la phase de détection, une phase d'apprentissage des réseaux de neurones siamois avec une base d'observations, dite base d'apprentissage.

L'apprentissage a pour but d'obtenir un réseau siamois fournissant des signatures différentes pour deux observations relatives à deux entités et des signatures identiques, ou fortement ressemblante, pour des observations relatives à une même entité.

La base d'apprentissage comprend des observations de même nature, et comprenant les mêmes paramètres, que les observations utilisées lors de la phase de détection. Autrement dit, lorsque lors de la phase de détection l'observation consiste en un vecteur de dimension N, par exemple un vecteur de dimension 200, alors la phase d'apprentissage comprend aussi des observations consistant en des vecteurs de dimension N, et en particulier 200.

La base d'apprentissage peut comprendre des observations concernant plusieurs, voire toutes les entités du SI.

Par exemple, si on dispose d'observations concernant les entités du SI pendant une durée de 1 an, les observations obtenues sur 9 mois peuvent être utilisées pour l'apprentissage et les observations obtenues pendant les trois autres mois peuvent être utilisées comme base de validation pour s'assurer que l'apprentissage est satisfaisant.

Suivant un mode de réalisation, les réseaux de neurones siamois peuvent être entrainés en utilisant une fonction d'optimisation en Contrastive Loss.

Dans ce cas, l'entrainement fournit en entrée de deux réseaux neuronaux siamois :

- une paire d'observations, notées « $O_i$ » et « $O_j$ », une observation pour chacun des réseaux neuronaux, et
- un label binaire, notée « Y », qui indique si les deux observations appartiennent à une même entité informatique.

Les réseaux siamois produisent chacun une signature, notée Si pour l'observation $O_i$ et $S_j$ pour l'observation $O_j$. L'objectif de l'entrainement par la Contrastive Loss est de minimiser la distance normalisée, notée $d(S_i,S_j)$, par exemple la distance cosinus, entre les deux signatures Si et $S_j$ si elles appartiennent à la même entité, et de la maximiser dans le cas contraire.

On estime que l'apprentissage est satisfaisant si :

- la distance $d(S_i,S_j) \geq 0{,}7$, lorsque Si et $S_j$ appartiennent à des entités informatiques différentes.
- la distance $d(S_i,S_j) < 0{,}3$ lorsque Si et $S_j$ appartiennent à la même entité.

Dans ce cas, la phase d'apprentissage peut être arrêtée.

Dans le cas contraire, la phase d'apprentissage doit continuer.

Suivant une alternative, il est possible d'entrainer plusieurs modèles, par exemple chacun pendant un nombre fixe d'itérations, en particulier 100 itérations, et choisir le modèle qui fournit les meilleurs résultats.

Suivant un mode de réalisation alternatif, les réseaux de neurones siamois peuvent être entrainés en utilisant une fonction d'optimisation en Triplet Loss.

Dans ce cas l'entrainement fournit en entrée de trois réseaux neuronaux siamois, partageant exactement les mêmes poids/paramètres, un triplet d'observations, notées « $O_i$ » et « $O_j$ » et « $O_k$ », une observation pour chacun des trois réseaux neuronaux, $O_i$ et $O_j$ appartenant à une même entité informatique et $O_k$ à une autre entité informatique.

Les réseaux siamois produisent chacun une signature, notée Si pour l'observation $O_i$ et $S_j$ pour l'observation $O_j$ et $S_k$ pour l'observation $O_k$. L'objectif de l'entrainement par la Triplet Loss est de s'assurer que la distance, par exemple la distance cosinus, entre les deux signatures de la même entité $d(S_i, S_j)$ soit inférieure à la distance entre les deux signatures appartenant à deux entités différentes d(Si, $S_k$).

On estime que l'apprentissage est satisfaisant si :

$$d(S_i,S_k)/d(S_i,S_j) \geq 2$$

Dans ce cas, la phase d'apprentissage peut être arrêtée. Dans le cas contraire, l'apprentissage doit continuer.

Suivant une alternative, il est possible d'entrainer plusieurs modèles, par exemple chacun pendant un nombre fixe d'itérations, en particulier 100 itérations, et choisir le modèle qui fournit les meilleurs résultats.

Bien entendu, bien que décrit en référence à une seule entité, l'invention est de préférence appliquée à plusieurs, et en particulier à toutes entités informatiques d'un SI.

Suivant un autre aspect de la présente invention, il est proposé un programme informatique comprenant des instructions exécutables par un appareil informatique qui, lorsqu'elles sont exécutées, mettent en œuvre le procédé selon l'invention.

Le programme informatique peut être codé en tout langage informatique.

Le programme informatique peut comprendre un seul programme informatique ou un ensemble de programmes informatiques coopérant entre eux.

Suivant un autre aspect de la présente invention, il est proposé un support informatique sur lequel est mémorisé, de manière non transitoire ou non volatil, le programme informatique selon l'invention.

Le support informatique peut être une clef USB, un CDROM, une mémoire flash, un appareil électronique ou informatique tel qu'une tablette, un ordinateur, un serveur, etc.

Suivant encore un autre aspect de la présente invention, il est proposé un système de détection d'anomalies dans un système d'information, SI, comprenant des moyens configurés pour mettre en œuvre le procédé selon l'invention.

Le système selon l'invention peut comprendre un ou plusieurs appareils informatiques.

En particulier, le système peut être un serveur, relié à chacune des entités informatiques du système d'information et comprenant :

- un module de collecte et d'agrégation de données pendant la fenêtre unitaire,
- un générateur de signatures numériques unitaires comprenant un réseau de neurones siamois préalablement entrainé,
- un module de calcul d'une signature de référence ; et
- au moins un module de calcul d'un score d'anomalie.

Chacun de ces modules peut être un module logiciel ou un module matériel ou une combinaison d'au moins un module logiciel et d'au moins un module matériel tel qu'un processeur, une puce électronique, etc.

Au moins un de ces modules peut être un module individuel.

Au moins deux de ces modules peuvent être intégrés en sein d'un unique module, logiciel et/ou matériel.

Suivant encore un autre aspect de la présente invention, il est proposé un système d'information comprenant :

- plusieurs entités informatiques, et
- des moyens configurés pour mettre en œuvre le procédé selon l'invention, tel que par exemple un programme d'ordinateur selon l'invention ou un système selon l'invention.

Comme expliqué plus haut, au moins une entité informatique peut être une machine physique, ou une machine virtuelle, un compte utilisateur physique, un compte utilisateur fonctionnel, etc.

### Description des figures et modes de réalisation

D'autres avantages et caractéristiques apparaîtront à l'examen de la description détaillée d'un mode de réalisation nullement limitatif, et des dessins annexés sur lesquels :

- la FIGURE 1 est une représentation schématique d'un exemple non limitatif de fenêtres temporelles pouvant être utilisées dans la présente invention ;
- la FIGURE 2a est une représentation schématique d'un exemple non limitatif d'un entrainement en Contrastive Loss pouvant être utilisé dans la présente invention ;
- la FIGURE 2b est une représentation schématique d'un exemple non limitatif d'un entrainement en Triplet Loss pouvant être utilisé dans la présente invention ;

- la FIGURE 3 est une représentation schématique d'un exemple de réalisation non limitatif d'un procédé selon l'invention ;
- la FIGURE 4 est une représentation schématique d'un exemple non limitatif de calcul d'un score d'anomalie pouvant être utilisé dans la présente invention ; et
- la FIGURE 5 est une représentation schématique d'un exemple de réalisation non limitatif d'un SI selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs FIGURES conservent la même référence.

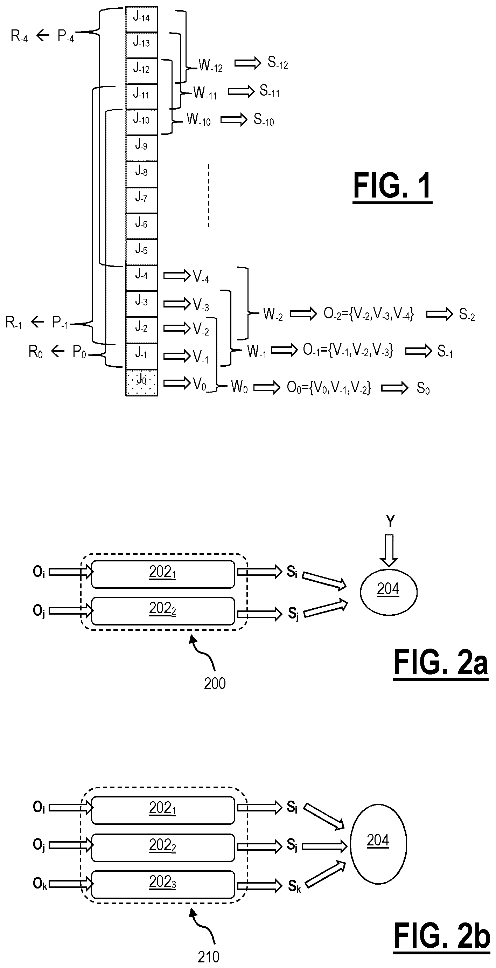

La FIGURE 1 est une représentation schématique d'un exemple de réalisation non limitatif de fenêtres temporelles pouvant être utilisées dans la présente invention.

La FIGURE 1 représente de manière schématique plusieurs, et en particulier, quinze fenêtres temporelles unitaires notées $J_0$-$J_{-14}$. Chacune de ces fenêtres temporelles correspond à la durée pendant laquelle des valeurs d'une pluralité de paramètres prédéfinis sont collectées pour au moins deux entités informatiques. Les valeurs des paramètres collectées lors d'une fenêtre $J_i$ représentent le comportement de l'entité informatique pendant la fenêtre unitaire $J_i$. Dans l'exemple représenté, le fenêtre temporelle $J_0$ est considérée comme étant la fenêtre unitaire actuelle, la fenêtre temporelle $J_{-1}$ la fenêtre immédiatement précédant la fenêtre temporelle actuelle, ainsi de suite.

La fenêtre unitaire peut correspondre à une durée d'un jour, de plusieurs jours, d'une semaine, etc.

La FIGURE 1 représente également une pluralité, et en particulier treize, fenêtres d'observation, notée $W_0$ à $W_{-12}$. Chaque fenêtre d'observation $W_i$ correspond à la durée considérée pour obtenir une observation permettant de générer une signature numérique associée à une entité informatique et à une fenêtre unitaire. Chaque fenêtre d'observation $W_i$ est associée à une fenêtre unitaire $J_i$ et comprend ladite fenêtre unitaire $J_i$. La fenêtre d'observation $W_0$ correspond à la fenêtre d'observation actuelle et est associée à la fenêtre unitaire actuelle $J_0$, la fenêtre d'observation $W_{-1}$ est celle précédant immédiatement la fenêtre d'observation actuelle $W_0$ dans le temps, et ainsi de suite. Dans l'exemple représenté, et de manière nullement limitative, chaque fenêtre d'observation $W_i$ associée à une fenêtre unitaire $J_i$ comprend ladite fenêtre unitaire $J_i$ et deux autre fenêtres, $J_{i-1}$ et $J_{i-2}$, précédant immédiatement ladite fenêtre unitaire $J_i$ dans le temps. Par exemple, la fenêtre d'observation actuelle $W_0$ comprend la fenêtre unitaire actuelle $J_0$ et les fenêtres unitaires $J_{-1}$ et $J_{-2}$ immédiatement précédant celle-ci dans le temps, la fenêtre d'observation actuelle $W_{-1}$ comprend la fenêtre unitaire $J_{-1}$ et les fenêtres unitaires $J_{-2}$ et $J_{-3}$ précédant immédiatement celle-ci dans le temps. Ainsi, chaque fenêtre d'observation $W_i$ est une fenêtre temporelle glissante vers le passé et comprenant la fenêtre unitaire $J_i$ à laquelle elle est associée.

Bien entendu, l'exemple donné en FIGURE 1 n'est nullement limitatif et la fenêtre d'observation peut comprendre un nombre de fenêtres unitaires différent de celui indiqué dans cet exemple. En particulier, la fenêtre d'observation $W_i$ peut comprendre uniquement la fenêtre unitaire $J_i$ à laquelle elle est associée.

La FIGURE 1 représente également une pluralité, et en particulier cinq, période de référence, notée $P_0$ à $P_{-4}$. Chaque période de référence $P_i$ correspond à la durée considérée pour générer une signature numérique, dite signature de référence, associée à une entité informatique, et représentative d'un comportement de référence de ladite entité informatique auquel on se réfère pour déterminer si un comportement de ladite entité informatique est anormal ou non sur une fenêtre unitaire. Chaque période de référence $P_i$ est associée à une fenêtre unitaire $J_i$ mais ne comprend pas ladite fenêtre unitaire $J_i$.

Dans l'exemple représenté, chaque période de référence $P_i$ associée à une fenêtre unitaire $J_i$ comprend les 10 fenêtres unitaires $J_{i-1}$ à $J_{i-10}$ immédiatement précédant ladite fenêtre unitaire $J_i$ dans le temps. Ainsi, la période de référence actuelle $P_0$ associée à une fenêtre unitaire actuelle $J_0$ comprend les 10 fenêtres unitaires $J_{-1}$ à $J_{-10}$ précédant immédiatement celle-ci. La période de référence $P_{-1}$ associée à une fenêtre unitaire $J_{-1}$ comprend les 10 fenêtres unitaires $J_{-2}$ à $J_{-11}$ précédant immédiatement celle-ci, ainsi de suite.

Bien entendu, l'exemple donnée en FIGURE 1 n'est nullement limitatif. La période de référence peut comprendre un nombre M de fenêtres unitaires différent de celui indiqué dans cet exemple. Préférentiellement, la période de référence est glissante dans le temps. Mais, la période de référence peut ne pas être glissante et peut être fixe. De plus, la durée de la période de référence peut être fixe ou variable.

Selon l'invention, une signature unitaire Si est générée pour chaque fenêtre unitaire $J_i$, en prenant en compte les données collectées pendant la fenêtre d'observation $W_i$ associée à ladite fenêtre unitaire $J_i$. Ainsi,

dans l'exemple représenté sur la FIGURE 1, pour la fenêtre unitaire actuelle $J_0$, une signature unitaire $S_0$ est générée par un générateur de signature en prenant en compte les données collectées pendant la fenêtre d'observation actuelle $W_0$, c'est-à-dire pendant les fenêtres unitaires $J_0$, $J_{-1}$ et $J_{-2}$. Pour la fenêtre unitaire $J_{-1}$, une signature unitaire $S_{-1}$ est générée par un générateur de signature en prenant en compte les données collectées pendant la fenêtre d'observation $W_{-1}$, c'est-à-dire pendant les fenêtres unitaires $J_{-1}$, $J_{-2}$ et $J_{-3}$, ainsi de suite.

Selon l'invention, une signature de référence $R_i$ est générée pour chaque fenêtre unitaire $J_i$. Dans l'exemple représenté, et de manière nullement limitative, la signature de référence $R_0$ est calculée comme étant la moyenne de toutes les signatures unitaires générées pour toutes les fenêtres unitaires se trouvant dans ladite période de référence. Ainsi, pour la période de référence actuelle $P_0$, la signature de référence $R_0$ est calculée comme étant la moyenne de toutes les signatures unitaires $S_{-1}$ à $S_{-10}$. Pour la période de référence $P_{-1}$, la signature de référence $R_{-1}$ est calculée comme étant la moyenne de toutes les signatures unitaires $S_{-2}$ à $S_{-11}$, ainsi de suite.

Bien entendu, la signature de référence peut être calculée d'une autre manière que celle décrite ici en référence à la FIGURE 1. Par exemple, la signature de référence peut être calculée par extrapolation des signatures unitaires associées aux fenêtres unitaires composant celle-ci, ou en utilisant toute autre relation prédéfinie.

Selon l'invention, le comportement d'une entité informatique durant une fenêtre unitaire $J_i$ est jugé comme étant anormal ou non en fonction d'un score d'anomalie, noté $Z_i$, calculé en fonction de la signature de référence $R_i$ et de la signature unitaire Si associées à ladite fenêtre unitaire $J_i$. Ainsi, pour la fenêtre unitaire actuelle $J_0$, le comportement de l'entité est jugé anormale ou non en fonction du score d'anomalie $Z_0$ calculé en fonction de la signature unitaire $S_0$ et de la signature de référence $R_0$.

Suivant un exemple de réalisation non limitatif, le score d'anomalie d'une entité informatique associé à la fenêtre unitaire $J_i$ est calculé avec la relation suivante :

$$Z_i = (d_i - MEAN_i)/STD_i$$

avec

- $d_i$ la distance, et en particulier la distance cosinus, entre la signature de référence $R_i$ et la signature unitaire Si ;
- $MEAN_i$ la moyenne des distances entre la signature de référence $R_i$ et chaque signature unitaire associée à chaque fenêtre unitaire de la période de référence $P_i$, et
- $STD_i$ l'écart type des distances entre la signature de référence $R_i$ et chaque signature unitaire associée à chaque fenêtre unitaire de ladite période de référence $P_i$.

Bien entendu, l'exemple donné pour le calcul du score d'anomalie n'est nullement limitatif. Par exemple, le score d'anomalie peut alternativement être calculé comme étant la distance cosinus entre la signature unitaire Si et la signature de référence $R_i$. Le score d'anomalie peut être calculé en utilisant toute autre relation prédéterminée.

Ensuite, ce score d'anomalie calculé $Z_i$ peut être comparé à au moins une valeur seuil prédéterminée, notée T, signalant un comportement anormal.

La valeur seuil T peut être déterminée par des essais et peut être fixe.

Alternativement, la valeur seuil peut être variable et peut être recalculée pour chaque fenêtre unitaire $J_i$. Par exemple, la valeur seuil T peut être la valeur maximale des distances cosinus entre les signatures unitaires associées aux fenêtres unitaires composant la période de référence. Toute autre relation peut être utilisée.

Selon l'invention, pour une entité informatique une signature unitaire Si associée à une fenêtre unitaire $J_i$ est calculée en fonction d'une observation $O_i$ associée à cette fenêtre unitaire $J_i$, ladite observation $O_i$ comprenant au moins les données collectées et agrégées lors de la fenêtre d'observation $W_i$ associée à ladite fenêtre unitaire $J_i$.

En particulier, pour chaque fenêtre unitaire $J_i$, des données relatives à N paramètres prédéterminées, notées $F_1$-$F_N$, sont collectées, avec $N \geq 1$. Ces données sont agrégées, par exemple par moyennage ou par concaténation ou encore par tout autre méthode connue, pour obtenir une matrice de dimension N, indiquant la valeur obtenue pour chaque paramètre pendant ladite fenêtre unitaire. Lorsque la fenêtre d'observation comprend uniquement la fenêtre unitaire, alors l'observation consiste en ledit vecteur de dimension N. Lorsque, la fenêtre d'observation comprend M fenêtres unitaires, avec $M \geq 2$, par exemple comme représenté sur la FIGURE 1, alors l'observation consiste en une matrice formée par M vecteurs de dimension N, à savoir les M vecteurs de dimension N obtenus pour les M fenêtres unitaires composant la fenêtre d'observation $W_i$.

Ainsi, pour l'exemple de la FIGURE 1, l'observation $O_0$ associée à la fenêtre unitaire $J_0$ pour une entité informatique consiste en une matrice formée par trois vecteurs de dimensions N, à savoir les vecteurs $V_0$, $V_{-1}$ et $V_{-2}$ collectées pour les fenêtres unitaires $J_0$, $J_{-1}$ et $J_{-2}$, de sorte que $O_0 = \{V_0, V_{-1}, V_{-2}\}$. L'observation $O_{-1}$ associée à la fenêtre unitaire $J_{-1}$ consiste en une matrice formée par trois vecteurs de dimensions N, à savoir les vecteurs $V_{-1}$, $V_{-2}$ et $V_{-3}$ collectées pour les fenêtres unitaires $J_{-1}$, $J_{-2}$ et $J_{-3}$, de sorte que $O_{-1} = \{V_{-1}, V_{-2}, V_{-3}\}$, ainsi de suite.

Par exemple, si 200 paramètres sont surveillés, alors chaque vecteur $V_i$ est de dimension 200 et chaque matrice $O_i$ est une matrice comprenant 3 lignes et 200 colonnes.

Tout paramètre relatif au fonctionnement d'une entité informatique peut être surveillé tel que par exemple un nombre de login réalisés par l'entité informatique, un nombre de processus fréquents/peu fréquents exécutés par l'entité informatique, un nombre d'accès par l'entité informatique à des hosts fréquents/peu fréquents, les noms de processus exécutés par l'entité informatique, les chemins vers des fichiers exécutés par l'entité informatique, etc. Les valeurs de certains paramètres peuvent être utilisées directement. Pour d'autres paramètres les valeurs mesurées peuvent être préalablement transformées avant d'être mémorisées dans le vecteur.

Selon l'invention, une signature unitaire $S_i$ associée à une fenêtre unitaire $J_i$ est générée par un générateur de signature, noté GEN, et également appelé générateur, prenant en entrée l'observation $O_i$ associée à ladite fenêtre unitaire $J_i$.

Selon l'invention, le générateur est basé sur l'architecture des réseaux de neurones siamois préalablement entrainé par un apprentissage profond.

Ainsi, la présente invention permet de réaliser une détection d'anomalies au sein d'un SI de manière plus efficace, plus évolutive, tout en étant plus simple et plus rapide à mettre en œuvre.

Nous allons maintenant décrire, en référence aux FIGURES 2a et 2b des exemples non limitatifs d'entrainements profonds de réseaux neuronaux pouvant être mis en œuvre dans la présente invention.

L'entrainement des réseaux de neurones siamois est réalisé avec une base d'observations, dite base d'entrainement, comprenant un nombre important d'observations relatives à plusieurs, voire toutes les, entités informatiques d'un SI. Par exemple, la base d'entrainement peut comprendre des observations obtenues sur une durée d'un an. Les observations obtenues sur une durée de 9 mois peuvent être utilisées pour entrainer les réseaux de neurones siamois et les observations obtenues sur les trois mois restants peuvent être utilisées pour valider les performances des réseaux de neurones siamois entrainés.

La FIGURE 2a est une représentation schématique d'un exemple d'entrainement de réseaux siamois pouvant être utilisé dans la présente invention.

L'entrainement représenté de manière schématique sur la FIGURE 2a est connu sous le nom de Contrastive Loss.

La FIGURE 2a représente un générateur de signature 200 comprenant deux réseaux siamois $202_1$ et $202_2$ d'architectures identiques.

Les deux réseaux siamois $202_1$ et $202_2$ partageant exactement les mêmes paramètres. Les mises à jour des paramètres sont synchronisées entre les deux réseaux siamois $202_1$ et $202_2$, c'est-à-dire lorsqu'on met à jour les paramètres d'un réseau, ceux de l'autre sont également mis à jour de la même façon. De sorte qu'à chaque instant t, les valeurs des paramètres sont exactement les mêmes entre les réseaux. De cette façon, une fois le modèle entrainé, on peut juste garder un seul des réseaux pour générer des signatures

Chacun des réseaux siamois $202_1$ et $202_2$ est prévu pour prendre en entrée une observation et fournir en sortie une signature numérique pour cette observation. Lors de la phase d'apprentissage un comparateur 204 prend en entrée les signatures fournies par chacun des réseaux siamois 202 d'une part et une donnée « Y » indiquant si les deux signatures correspondent à une même entité ou à des entités différentes. Le comparateur est configuré pour déterminer la distance entre les signatures fournies par les réseaux siamois $202_1$ et $202_2$, et comparer cette distance à au moins une valeur prédéterminée signalant une identité ou non des deux signatures.

Suivant l'exemple représenté, l'entrainement fournit :

- une paire d'observations, à savoir une observation $O_i$ pour le réseau neuronal $202_1$ et une observation $O_j$ pour le réseau neuronal $202_2$; et
- un label binaire, notée « Y », avec Y=1 si les deux observations $O_i$ et $O_j$ appartiennent à une même entité informatique, et Y=0 dans le cas contraire.

Le réseau neuronal $202_1$ produit une signature $S_i$ pour l'observation $O_i$ et le réseau neuronal $202_2$ produit une signature $S_j$ pour l'observation $O_j$. Le comparateur 204 détermine la distance normalisée, notée $d(S_i,S_j)$, par exemple la distance cosinus, entre les deux signatures $S_i$ et $S_j$. Cette distance $d(S_i,S_j)$ doit être minimisée si les deux signatures appartiennent à la même entité, et maximisée dans le cas contraire.

On estime que l'apprentissage du générateur 200 comprenant les réseaux de neurones siamois est satisfaisant si :

- la distance normalisée $d(S_i,S_j) \geq 0,7$, lorsque $S_i$ et $S_j$ appartiennent à des entités informatiques différentes.
- la distance normalisée $d(S_i,S_j) \leq 0,3$ lorsque $S_i$ et $S_j$ appartiennent à la même entité.

Dans ce cas, la phase d'apprentissage peut être arrêté. Dans le cas contraire, l'apprentissage doit continuer.

Une fois le générateur entrainé, l'un quelconque des réseaux siamois $202_1$ et $202_2$ peut être utilisé pour générer les signatures unitaires. L'autre des réseaux siamois n'est pas utilisé.

Suivant une alternative, il est possible d'entrainer plusieurs modèles, par exemple chacun pendant un nombre fixe d'itérations, en particulier 100 itérations, et choisir le modèle qui fournit les meilleurs résultats pour le générateur de signatures.

La FIGURE 2b est une représentation schématique d'un exemple de réalisation non limitatif d'un entrainement de réseaux siamois pouvant être utilisé dans la présente invention.

L'entrainement représenté de manière schématique sur la FIGURE 2b est connu sous le nom de Triplet Loss.

La FIGURE 2b représente un générateur de signature 210 comprenant trois réseaux siamois $202_1$, $202_2$ et $202_3$ d'architecture identique, chacun prévu pour prendre en entrée une observation et fournir en sortie une signature numérique pour cette observation. Lors de la phase d'apprentissage, un comparateur 204 prenant en entrée les signatures fournies par chacun des réseaux siamois 202 et configuré pour comparer entre-elles ces signatures, par exemple en calculant la distance entre ces signatures prises deux à deux.

Suivant l'exemple représenté, l'entrainement fournit :

- une observation, notées « $O_i$ »en entrée du réseau neuronal $202_1$,
- une observation, notées « $O_j$ »en entrée du réseau neuronal $202_2$, et
- une observation, notées « $O_k$ »en entrée du réseau neuronal $202_3$.

Les observations $O_i$ et $O_j$ concernent une même entité et l'observation $O_k$ concerne une autre entité.

Le réseau neuronal $202_1$ produit une signature Si pour l'observation $O_i$, le réseau neuronal $202_2$ produit une signature $S_j$ pour l'observation $O_j$ et le réseau neuronal $202_3$ produit une signature $S_k$ pour l'observation $O_k$. Le comparateur 204 détermine la distance normalisée, notée $d_1(S_i,S_j)$, par exemple la distance cosinus, entre les deux signatures Si et $S_j$. Il détermine également la distance normalisée, notée $d_2(S_i,S_k)$ entre les deux signatures Si et $S_K$. L'entrainement en Triplet Loss a pour objectif de minimiser la distance $d_1$ et de maximiser la distance $d_2$.

Suivant un exemple de réalisation nullement limitatif, l'apprentissage peut être considéré comme satisfaisant si :

$$d_2(S_i,S_k)/d_1(S_i,S_j) \geq 2$$

Dans le cas contraire, l'apprentissage doit continuer.

Une fois le générateur entrainé, l'un quelconque des réseaux siamois $202_1$, $202_2$ ou $202_3$ peut être utilisé pour générer les signatures unitaires. Les autres des réseaux siamois ne sont pas utilisés.

Suivant une alternative, il est possible d'entrainer plusieurs modèles, par exemple chacun pendant un nombre fixe d'itérations, en particulier 100 itérations, et choisir le modèle qui fournit les meilleurs résultats pour le générateur de signatures.

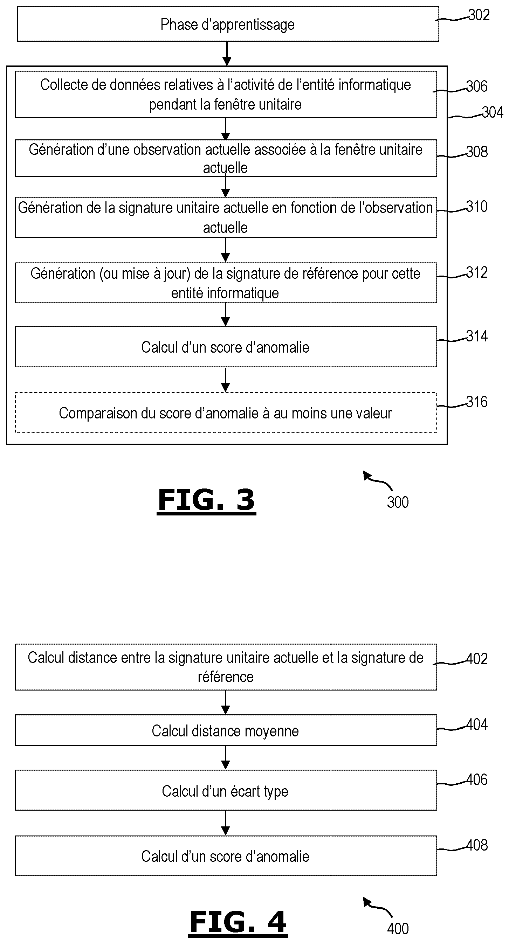

La FIGURE 3 est une représentation schématique d'un exemple de réalisation non limitatif d'un procédé de détection d'anomalies au sein d'un SI selon l'invention.

Le procédé 300 représenté sur la FIGURE 3 comprend une phase 302 d'apprentissage profond des réseaux de neurones siamois en utilisant une base d'apprentissage comprenant d'une part des observations pour l'entrainement des réseaux de neurones siamois et d'autre part des observations pour valider l'apprentissage. La phase d'entrainement peut être réalisée en utilisant l'un quelconque des exemples d'entrainement décrits en référence aux FIGURES 2a et 2b.

Le procédé 300 comprend en outre une phase 304 de détection d'anomalies réalisée à l'aide d'un des réseaux de neurones siamois ayant été entrainés lors de la phase d'apprentissage 302. Autrement dit, après entrainement des réseaux de neurones siamois, seul l'un de ces réseaux est utilisé lors de la phase de détection 304.

La phase de détection 304 peut être mise en œuvre pour au moins une entité, pour plusieurs entités, et en particulier pour chacune des entités, du SI individuellement, à tour de rôle ou en parallèle.

La phase de détection 304 est réitérée autant de fois que souhaité, par exemple pour chaque fenêtre unitaire. La fenêtre unitaire peut être d'une durée d'un jour, de 3 jours, etc.

Dans l'exemple décrit, on considère que la phase de détection 304 est réitérée pour chaque fenêtre unitaire, et que chaque fenêtre unitaire présente une durée de 1 jour. De plus, dans la suite, l'exemple sera décrit en référence à une même et unique entité, sachant que la phase de détection peut être mise en œuvre pour plus d'une entité, prise individuellement, en parallèle ou à tour de rôle.

Lors d'une étape 306 de la phase de détection des données relatives à l'activité de l'entité informatique pendant la fenêtre unitaire actuelle sont collectées. Ces données sont éventuellement filtrées et agrégées pour fournir un vecteur de dimension « N », avec « N » le nombre de paramètres de fonctionnement surveillés, et $N \geq 1$.

Lors d'une étape 308 de la phase de détection 304, une observation, dite actuelle, comprenant les données collectées sur une fenêtre d'observation, dite actuelle est générée. La fenêtre d'observation actuelle comprend la fenêtre unitaire actuelle et se termine par ladite fenêtre actuelle. La fenêtre d'observation actuelle peut correspondre à la fenêtre unitaire actuelle. Dans ce cas, l'observation actuelle correspond au vecteur de dimension N généré lors de l'étape 306. Alternativement, la fenêtre d'observation actuelle peut comprendre la fenêtre unitaire actuelle et « M » fenêtre(s) unitaire(s) précédant immédiatement la fenêtre unitaire actuelle dans le temps, avec $M \geq 1$. Dans ce cas l'observation actuelle correspond à une matrice formée par les M+1 vecteurs de dimension N obtenus pour les fenêtres unitaires formant la fenêtre d'observation. Par exemple, si la fenêtre d'observation actuelle comprend trois fenêtres unitaires, comme dans l'exemple sur la FIGURE 1, alors l'observation actuelle correspond à une matrice formée par ces trois vecteurs de dimension N.

Lors d'une étape 310 de la phase de détection, une signature unitaire, correspondant à la fenêtre unitaire actuelle, est générée par le générateur de signature prenant en entrée l'observation actuelle.

Lors d'une étape 312, une signature de référence, dite actuelle, est générée, ou mise à jour, pour cette entité informatique et pour cette fenêtre unitaire actuelle, cette signature de référence représentant le comportement de ladite entité informatique pendant une période de référence, notée P. Suivant un exemple de réalisation non limitatif, la période de référence P est une fenêtre glissante comprenant plusieurs, en particulier M, fenêtres unitaires précédant immédiatement la fenêtre unitaire actuelle, avec $M \geq 2$. Dans ce cas, la signature de référence actuelle, notée $R_0$, correspond à la moyenne des signatures unitaires obtenues pour ces M fenêtres unitaires. Dans l'exemple représenté sur la FIGURE 1, M=10. Par conséquent, pour la fenêtre unitaire actuelle $J_0$, en notant $R_0$ la signature de référence actuelle et $S_0$ la signature unitaire actuelle, on a :

$$R_0 = moy\ (S_{-1} - S_{-M})$$

Lors d'une étape 314, un score d'anomalie, notée $Z_0$, est calculé pour l'entité informatique et pour la fenêtre actuelle. Le score d'anomalie a pour objectif de quantifier l'écart entre le comportement de l'entité informatique pendant la fenêtre unitaire, et le comportement de cette même entité informatique pendant la période de référence P.

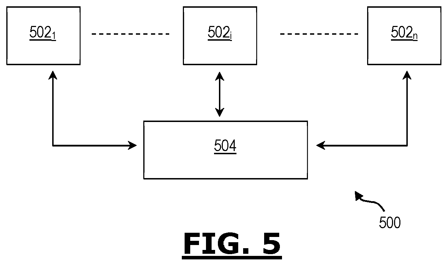

Le score d'anomalie $Z_0$ peut être calculé de différentes manières. Par exemple, le score d'anomalie peut corresponde à la distance entre la signature unitaire actuelle $S_0$ et à la signature de référence actuelle $R_0$, $Z_0$=distance($S_0$,$R_0$). Le score d'anomalie $Z_0$ peut être calculé en utilisant une autre relation, prédéterminée, telle que celle décrite plus loin en référence à la FIGURE 5.

En outre, le procédé 300 peut comprendre une étape optionnelle 316 de comparaison du score d'anomalie actuelle $Z_0$ à au moins une valeur prédéterminée, tel qu'une valeur seuil représentant un comportement anormal.

Cette valeur seuil peut être déterminée par des essais.

Cette valeur seuil peut aussi être déterminée en fonction des scores d'anomalie obtenues lors d'itérations précédentes de la phase de détection 304. Par exemple, la valeur seuil peut correspondre à la valeur maximale de variation des scores d'anomalies constatées sur la période de référence.

La FIGURE 4 est une représentation schématique d'un exemple de réalisation non limitatif d'un calcul de score d'anomalie pouvant être mis en œuvre dans la présente invention.

L'exemple 400 représenté sur la FIGURE 4 peut être l'étape 314 du procédé 300 de la FIGURE 3.

Dans l'exemple 400, une étape 402 détermine la distance $d_0$ entre la signature actuelle et la signature de référence $R_0$.

Ensuite, une étape 404 détermine, ou met à jour, une valeur, notée MEAN, correspondant à la distance moyenne entre la signature de référence $R_0$ et chacune des signatures $S_{-1}$ à $S_{-M}$. Autrement dit, cette étape 404 calcule la valeur MEAN avec la relation suivante :

MEAN=moyenne ($d_{-1}$, ..., $d_{-M}$) avec $d_i$=distance($S_i$,$R_0$) avec $-1 \leq i \leq -M$

Une étape 406 calcule l'écart type, notée STD, des distances entre la signature de référence et chaque signature unitaire associée à chaque fenêtre unitaire de ladite période de référence. Autrement dit, cette étape 406 calcule la valeur STD avec la relation suivante :

STD = Écart type ($d_{-1}$, ..., $d_{-M}$) avec $d_i$ =distance($S_i$,$R_0$) avec $-1 \leq i \leq -M$

Enfin, une étape 408 détermine le score d'anomalie $Z_0$ en utilisant la relation suivante :

$$Z_0 = (d_0 - MEAN)/STD$$

Bien entendu, cet exemple de réalisation n'est nullement limitatif et toute autre relation peut être utilisée.

La FIGURE 5 est une représentation schématique d'un exemple de réalisation non limitatif d'un SI selon l'invention.

Le système d'information 500 de la FIGURE 5 comprend une ou plusieurs entités informatiques $502_1$-$502_n$ et un système 504 de détection d'anomalies prévu pour mettre en œuvre le procédé selon l'invention, et en particulier le procédé 300 de la FIGURE 3

Chaque entité informatique $502_i$ peut être une machine physique, ou une machine virtuelle, un compte utilisateur physique, un compte utilisateur fonctionnel, un serveur, etc. Au moins deux des entités informatiques $502_1$-$502_n$ peuvent ne pas être connectées entre-elles. Au moins deux des entités informatiques $502_1$-$502_n$ peuvent être connectées entre-elles au travers d'un réseau filaire ou sans fil, un réseau local, un réseau de type Internet, etc.

Le système 504 peut comprendre un ou plusieurs appareils informatiques.

En particulier, le système 504 peut être un serveur, relié à chacune des entités informatiques $502_1$-$502_n$, de manière filaire ou sans fil, directement ou au travers d'un réseau de communication, local ou non.

Le système 504 peut comprendre :

- un module de collecte et d'agrégation de données pendant une fenêtre unitaire,
- un générateur de signatures numériques unitaires basé sur une architecture de réseaux de neurones siamois,
- un module de calcul d'une signature de référence ; et

- au moins un module de calcul de score d'anomalie.

Chacun de ces modules (non représentés sur la FIGURE 5) peut être un module logiciel ou un module matériel ou une combinaison d'au moins un module logiciel et d'au moins un module matériel tel qu'un processeur, une puce électronique, etc.

Au moins un de ces modules peut être un module individuel.

Au moins deux de ces modules peuvent être intégrés en sein d'un unique module, logiciel et/ou matériel.

Bien entendu, l'invention n'est pas limitée aux exemples détaillés ci-dessus donnés à titre d'illustration et la portée générale de l'invention est définie dans les revendications.

## Revendications

1. Procédé (300), mis en œuvre par ordinateur, de détection d'anomalies dans un système d'information, SI, comprenant plusieurs entités informatiques ($502_1$-$502_n$), ledit procédé (300) comprenant a moins une itération d'une phase (304) de détection pour au moins une entité ($502_1$-$502_n$) dudit SI et au moins une fenêtre temporelle (J), dite unitaire, actuelle, ladite phase de détection (304) comprenant les étapes suivantes :

   - collecte (306) de données relatives à une activité de ladite entité ($502_1$-$502_n$) pendant ladite fenêtre unitaire actuelle ($J_0$) ;
   - construction (308) d'un jeu de données ($O_0$), dit observation, associé à ladite fenêtre unitaire actuelle ($J_0$), en fonction de données collectées pendant une fenêtre ($W_0$), dite d'observation, comprenant ladite fenêtre unitaire actuelle ($J_0$),
   - génération (310) d'une signature numérique, dite signature unitaire, représentative d'un comportement de ladite entité ($502_1$-$502_n$) lors de ladite fenêtre unitaire actuelle ($J_0$) en fonction de ladite observation ($O_0$) ; et
   - calcul (314) d'un score d'anomalie, associée à ladite entité ($502_1$-$502_n$) pour ladite fenêtre unitaire (J), en fonction de :

     • ladite signature unitaire ($S_0$), et
     • une signature numérique ($R_0$), dite de référence, préalablement calculée pour ladite entité ($502_1$-$502_n$) et représentative de l'activité de ladite entité ($502_1$-$502_n$) sur une période ($P_0$), dite de référence, précédant ladite fenêtre unitaire actuelle ($J_0$) ;

   **caractérisé en ce que** chaque signature numérique ($S_0$,$P_0$) est générée en utilisant un générateur (200;210) basé sur des réseaux de neurones siamois ($202_1$,$202_2$;$202_1$,$202_2$,$202_3$) à apprentissage profond.

2. Procédé (300) selon la revendication précédente, **caractérisé en ce que**, la période de référence ($P_0$) comprend plusieurs fenêtres unitaires ($J_{-1}$-$J_{-11}$), précédant la fenêtre unitaire actuelle ($J_0$), ledit procédé comprenant en outre une étape (312) de génération de la signature de référence ($R_0$) comprenant les étapes suivantes :

   - pour chaque fenêtre unitaire ($J_{-1}$-$J_{-11}$) de la période de référence ($P_0$), génération, par le générateur de signature, d'une signature numérique unitaire en fonction de l'observation associée à ladite fenêtre unitaire, et
   - calcul de ladite signature de référence ($R_0$) en fonction desdites signatures unitaires générées, en particulier par moyennage desdites signatures unitaires.

3. Procédé (300) selon l'une quelconque des revendications précédentes, **caractérisé en ce que** la phase de détection (304) comprend une mise à jour de la signature de référence avec la signature unitaire ($S_0$) associée à la fenêtre unitaire actuelle ($J_0$), pour une nouvelle itération de ladite phase de détection (304) pour une fenêtre unitaire suivante.

4. Procédé (300) selon l'une quelconque des revendications 2 ou 3, **caractérisé en ce que**, pour une signature unitaire, notée $S_0$, le score d'anomalie, notée $Z_0$, est calculé en utilisant la relation suivante :

$$Z_0=(d_0-MEAN)/STD$$

   avec

   - $d_0$ la distance entre la signature de référence, notée $R_0$, et la signature unitaire $S_0$ ;
   - MEAN la moyenne des distances entre la signature de référence $R_0$ et chaque signature unitaire associée à chaque fenêtre unitaire de ladite période de référence, notée $P_0$, et
   - STD l'écart type des distances entre la signature de référence $R_0$ et chaque signature unitaire associée à chaque fenêtre unitaire de ladite période de référence $P_0$.

5. Procédé (300) selon la revendication précédente, **caractérisé en ce que**, la fenêtre d'observation ($W_0$) est égale à la fenêtre unitaire actuelle ($J_0$), et **en ce que** l'observation associée à la fenêtre unitaire actuelle ($J_0$) est construite en fonction des données collectées uniquement lors de la fenêtre unitaire actuelle ($J_0$).

**6.** Procédé (300) selon l'une quelconque des revendications 1 à 4, **caractérisé en ce que**, la fenêtre d'observation ($W_0$) est une fenêtre temporelle glissante comprenant la fenêtre unitaire actuelle ($J_0$) et au moins une fenêtre unitaire ($J_{-1}, J_{-2}$) précédant dans le temps ladite fenêtre unitaire actuelle ($J_0$), l'observation ($O_0$) associée à la fenêtre unitaire actuelle ($J_0$) est construite en fonction de données collectées lors desdites fenêtres unitaires ($J_0, J_{-1}, J_{-2}$).

**7.** Procédé (300) selon l'une quelconque des revendications précédentes, **caractérisé en ce que** l'étape (306) de collecte de données comprend une collecte d'une ou plusieurs valeurs pour un ou plusieurs paramètres prédéfinis.

**8.** Procédé (300) selon la revendication précédente, **caractérisé en ce qu'**il comprend une étape d'agrégation, pour au moins un paramètre, de plusieurs valeurs collectées lors de la fenêtre unitaire.

**9.** Procédé (300) selon l'une quelconque des revendications précédentes, **caractérisé en ce qu'**il comprend une phase (302) d'apprentissage des réseaux de neurones siamois ($202_1, 202_2; 202_1, 202_2, 202_3$) avec une base d'observations d'apprentissage, préalablement à la phase de détection (304).

**10.** Procédé (300) selon la revendication précédente, **caractérisé en ce que** les réseaux de neurones siamois ($202_1, 202_2$) sont entrainés en utilisant une fonction d'optimisation Contrastive Loss.

**11.** Procédé (300) selon la revendication 9, **caractérisé en ce que** les réseaux de neurones siamois ($202_1, 202_2, 202_3$) sont entrainés en utilisant une fonction d'optimisation en Triplet Loss.

**12.** Programme informatique comprenant des instructions exécutables par un appareil informatique qui, lorsqu'elles sont exécutées, mettent en œuvre le procédé (300) selon l'une quelconque des revendications précédentes.

**13.** Système de détection d'anomalies dans un système d'information, SI, comprenant des moyens configurés pour mettre en œuvre le procédé (300) selon l'une quelconque des revendications 1 à 11.

**14.** Système d'information (500) comprenant :

- plusieurs entités informatiques ($502_1$-$502_n$), et
- des moyens (504) configurés pour mettre en œuvre le procédé (300) selon l'une quelconque des revendications 1 à 11.

**15.** Système (500) selon la revendication précédente, **caractérisé en ce qu'**au moins une entité informatique ($502_1$-$502_n$) est une machine physique, ou une machine virtuelle, un compte utilisateur physique, un compte utilisateur fonctionnel.

**Patentansprüche**

**1.** Verfahren (300), das durch einen Computer implementiert wird, zum Erkennen von Anomalien in einem Informationssystem, SI, umfassend mehrere Computerentitäten ($502_1$-$502_n$), wobei das Verfahren (300) mindestens eine Iteration einer Erkennungsphase (304) für mindestens eine Entität ($502_1$-$502_n$) des SI und mindestens ein aktuelles sogenanntes Einheitszeitfenster (J) umfasst, wobei die Erkennungsphase (304) die folgenden Schritte umfasst:

- Erfassen (306) von Daten relativ zu einer Aktivität der Entität ($502_1$-$502_n$) während des aktuellen Einheitsfensters ($J_0$);
- Konstruieren (308) eines sogenannten Beobachtungsdatensatzes ($O_0$), der dem aktuellen Einheitsfenster ($J_0$) zugeordnet ist, in Abhängigkeit von Daten, die während eines sogenannten Beobachtungsfensters ($W_0$) erfasst werden, umfassend das aktuelle Einheitsfenster ($J_0$),
- Erzeugen (310) einer digitalen sogenannten Einheitssignatur, die ein Verhalten der Entität ($502_1$-$502_n$) während des aktuellen Einheitsfensters ($J_0$) in Abhängigkeit von der Beobachtung ($O_0$) darstellt; und
- Berechnen (314) einer Anomaliebewertung, die der Entität ($502_1$-$502_n$) für das Einheitsfenster ($J_0$) zugeordnet ist, in Abhängigkeit von:

• der Einheitssignatur ($S_0$), und
• einer digitalen sogenannten Referenzsignatur ($R_0$), die zuvor für die Entität ($502_1$-$502_n$) berechnet wurde und die Aktivität der Entität ($502_1$-$502_n$) über einen sogenannten Referenzzeitraum ($P_0$) vor dem aktuellen Einheitsfenster ($J_0$) darstellt; **dadurch gekennzeichnet, dass** jede digitale Signatur ($S_0$, $P_0$) unter Verwendung eines Generators (200;210) basierend auf siamesischen neuronalen Netzwerken ($202_1, 202_2; 202_1, 202_2, 202_3$) mit Deep Learning erzeugt wird.

**2.** Verfahren (300) nach dem vorstehenden Anspruch, **dadurch gekennzeichnet, dass** der Referenzzeitraum ($P_0$) mehrere Einheitsfenster ($J_{-1}$-$J_{-11}$) vor dem aktuellen Einheitsfenster ($J_0$) umfasst, wobei das Verfahren ferner einen Schritt (312) zum Erzeugen

der Referenzsignatur ($R_0$) umfasst, umfassend die folgenden Schritte:

- für jedes Einheitsfenster ($J_{-1}$-$J_{-11}$) des Referenzzeitraums ($P_0$), Erzeugen, durch den Signaturgenerator, einer digitalen Einheitssignatur in Abhängigkeit von der Beobachtung, die dem Einheitsfenster zugeordnet ist, und
- Berechnen der Referenzsignatur ($R_0$) in Abhängigkeit von den erzeugten Einheitssignaturen, insbesondere durch Mittelung der Einheitssignaturen.

3. Verfahren (300) nach einem der vorstehenden Ansprüche,
**dadurch gekennzeichnet, dass** die Erkennungsphase (304) eine Aktualisierung der Referenzsignatur mit der Einheitssignatur ($S_0$), die dem aktuellen Einheitsfenster ($J_0$) zugeordnet ist, für eine neue Iteration der Erkennungsphase (304) für ein folgendes Einheitsfenster umfasst.

4. Verfahren (300) nach einem der Ansprüche 2 oder 3,
**dadurch gekennzeichnet, dass** für eine Einheitssignatur, bezeichnet $S_0$, die Anomaliebewertung, bezeichnet $Z_0$, unter Verwendung der folgenden Beziehung berechnet wird:

$$Z_0=(d_0-MEAN)/STD$$

mit

- $d_0$ der Abstand zwischen der Referenzsignatur, bezeichnet $R_0$, und der Einheitssignatur $S_0$;
- MEAN der Mittelwert der Abstände zwischen der Referenzsignatur $R_0$ und jeder Einheitssignatur, die jedem Einheitsfenster des Referenzzeitraums zugeordnet ist, bezeichnet $P_0$, und
- STD die Standardabweichung der Abstände zwischen der Referenzsignatur $R_0$ und jeder Einheitssignatur, die jedem Einheitsfenster des Referenzzeitraums $P_0$ zugeordnet ist.

5. Verfahren (300) nach dem vorstehenden Anspruch,
**dadurch gekennzeichnet, dass** das Beobachtungsfenster ($W_0$) gleich dem aktuellen Einheitsfenster ($J_0$) ist, und dass die Beobachtung, die dem aktuellen Einheitsfenster ($J_0$) zugeordnet ist, in Abhängigkeit von Daten konstruiert wird, die nur während des aktuellen Einheitsfensters ($J_0$) erfasst werden.

6. Verfahren (300) nach einem der Ansprüche 1 bis 4,
**dadurch gekennzeichnet, dass** das Beobachtungsfenster ($W_0$) ein gleitendes Zeitfenster ist, umfassend das aktuelle Einheitsfenster ($J_0$) und mindestens ein Einheitsfenster ($J_{-1}$,$J_{-2}$) zeitlich vor dem aktuellen Einheitsfenster ($J_0$), die Beobachtung ($O_0$), die dem aktuellen Einheitsfenster ($J_0$) zugeordnet ist, in Abhängigkeit von Daten konstruiert wird, die während der Einheitsfenster ($J_0$, $J_{-1}$, $J_{-2}$) erfasst werden.

7. Verfahren (300) nach einem der vorstehenden Ansprüche,
**dadurch gekennzeichnet, dass** der Datenerfassungsschritt (306) ein Erfassen eines oder mehrerer Werte für einen oder mehrere vordefinierte Parameter umfasst.

8. Verfahren (300) nach dem vorstehenden Anspruch,
**dadurch gekennzeichnet, dass** es einen Aggregationsschritt für mindestens einen Parameter mehrerer Werte umfasst, die während des Einheitsfensters erfasst werden.

9. Verfahren (300) nach einem der vorstehenden Ansprüche,
**dadurch gekennzeichnet, dass** es eine Phase (302) zum Lernen siamesischer neuronaler Netzwerke ($202_1$, $202_2$; $202_1$, $202_2$, $202_3$) mit einer Lernbeobachtungsbasis vor der Erkennungsphase (304) umfasst.

10. Verfahren (300) nach dem vorstehenden Anspruch,
**dadurch gekennzeichnet, dass** die siamesischen neuronalen Netzwerke ($202_1$, $202_2$) unter Verwendung einer Contrastive-Loss-Optimierungsfunktion trainiert werden.

11. Verfahren (300) nach Anspruch 9, **dadurch gekennzeichnet, dass** die siamesischen neuronalen Netzwerke ($202_1$, $202_2$, $202_3$) unter Verwendung einer Triplet-Loss-Optimierungsfunktion trainiert werden.

12. Computerprogramm, umfassend Anweisungen, die durch eine Computervorrichtung ausführbar sind, die, wenn sie ausgeführt werden, das Verfahren (300) nach einem der vorstehenden Ansprüche implementieren.

13. System zum Erkennen von Anomalien in einem Informationssystem, SI, umfassend Mittel, die zum Implementieren des Verfahrens (300) nach einem der Ansprüche 1 bis 11 konfiguriert sind.

14. Informationssystem (500), umfassend:

- mehrere Computerentitäten ($502_1$-$502_n$), und
- Mittel (504), die zum Implementieren des Verfahrens (300) nach einem der Ansprüche 1 bis 11 konfiguriert sind.

15. System (500) nach dem vorstehenden Anspruch,

**dadurch gekennzeichnet, dass** mindestens eine Computerentität ($502_1$-$502_n$) eine physische Maschine oder eine virtuelle Maschine, ein physisches Benutzerkonto, ein funktionales Benutzerkonto ist.

**Claims**

1. A computer implemented method (300) for detecting anomalies in an information system, SI, comprising several computer entities ($502_1$-$502_n$), said method (300) comprising at least one iteration of a detection phase (304) for at least one entity ($502_1$-$502_n$) of said SI and at least one current time window (J), called current unitary window, said detection phase (304) comprising the following steps:

   - collecting (306) data related to an activity of said entity ($502_1$-$502_n$) during said current unitary window ($J_0$);
   - constructing (308) a data set ($O_0$), called observation, associated with said current unitary window ($J_0$), based on data collected during a window ($W_0$), called observation window, comprising said current unitary window ($J_0$),
   - generating (310) a digital signature, called unitary signature, representative of a behavior of said entity ($502_1$-$502_n$) during said current unitary window ($J_0$) based on said observation ($O_0$); and
   - calculating (314) an anomaly score, associated with said entity ($502_1$-$502_n$) for said unitary window ($J_0$), based on:

      - said unitary signature ($S_0$), and
      - a digital signature ($R_0$), called reference signature, previously calculated for said entity ($502_1$-$502_n$) and representative of the activity of said entity ($502_1$-$502_n$) over a period ($P_0$), called reference period, preceding said current unitary window ($J_0$);

   **characterized in that** each digital signature ($S_0$,$P_0$) is generated using a generator (200;210) based on deep learning Siamese neural networks ($202_1$,$202_2$;$202_1$,$202_2$,$202_3$).

2. The method (300) according to the preceding claim, **characterized in that** the reference period ($P_0$) comprises several unitary windows ($J_{-1}$-$J_{-11}$), preceding the current unitary window ($J_0$), said method further comprising a step (312) of generating the reference signature ($R_0$) comprising the following steps:

   - for each unitary window ($J_{-1}$-$J_{-11}$) of the reference period ($P_0$), generating, by the signature generator, a unitary digital signal based on the observation associated with said unitary window, and
   - calculating said reference signature ($R_0$) based on said generated unitary signatures, particularly by averaging said unitary signatures.

3. The method (300) according to any of the preceding claims, **characterized in that** the detection phase (304) comprises an update of the reference signature with the unitary signature ($S_0$) associated with the current unitary window ($J_0$), for a new iteration of said detection phase (304) for a subsequent unitary window.

4. The method (300) according to any one of claims 2 or 3, **characterized in that**, for a unitary signature, denoted $S_0$, the anomaly score, denoted $Z_0$, is calculated using the following relationship:

$$Z_0=(d_0-\text{MEAN})/\text{STD}$$

   where

      - $d_0$ is the distance between the reference signature, denoted $R_0$, and the unitary signature $S_0$;
      - MEAN is the average of the distances between the reference signature $R_0$ and each unitary signature associated with each unitary window of said reference period, denoted $P_0$, and
      - STD is the standard deviation of the distances between the reference signature $R_0$ and each unitary signature associated with each unitary window of said reference period $P_0$.

5. The method (300) according to the preceding claim, **characterized in that** the observation window ($W_0$) is equal to the current unitary window ($J_0$), and **in that** the observation associated with the current unitary window ($J_0$) is constructed based on data collected only during the current unitary window ($J_0$).

6. The method (300) according to any one of claims 1 to 4, **characterized in that** the observation window ($W_0$) is a sliding time window comprising the current unitary window ($J_0$) and at least one unitary window ($J_{-1}$,$J_{-2}$) preceding in time said current unitary window ($J_0$), the observation ($O_0$) associated with the current unitary window ($J_0$) is constructed based on data collected during said unitary windows ($J_0$,$J_{-1}$,$J_{-2}$).

7. The method (300) according to any one of the preceding claims, **characterized in that** the step (306) of collecting data comprises a collection of one or more values for one or more predefined parameters.

**8.** The method (300) according to the preceding claim, **characterized in that** it comprises a step of aggregating, for at least one parameter, several values collected during the unitary window.

**9.** The method (300) according to any one of the preceding claims, **characterized in that** it comprises a learning phase (302) of the Siamese neural networks ($202_1$,$202_2$;$202_1$,$202_2$,$202_3$) with a base of learning observations, prior to the detection phase (304).

**10.** The method (300) according to the preceding claim, **characterized in that** the Siamese neural networks ($202_1$,$202_2$) are trained using a Contrastive Loss optimization function.

**11.** The method (300) according to claim 9, **characterized in that** the Siamese neural networks ($202_1$,$202_2$,$202_3$) are trained using a Triplet Loss optimization function.

**12.** A computer program comprising instructions executable by a computer device which, when they are executed, implement the method (300) according to any one of the preceding claims.

**13.** An anomaly detection system in an information system, SI, comprising means configured for implementing the method (300) according to any one of claims 1 to 11.

**14.** An information system (500) comprising:

- several computer entities ($502_1$-$502_n$), and
- means (504) configured for implementing the method (300) according to any one of claims 1 to 11.

**15.** The system (500) according to the preceding claim, **characterized in that** at least one computer entity ($502_1$-$502_n$) is a physical machine, or a virtual machine, a physical user account, a functional user account.

FIG. 1

FIG. 2a

FIG. 2b

Phase d'apprentissage — 302

Collecte de données relatives à l'activité de l'entité informatique pendant la fenêtre unitaire — 306

— 304

Génération d'une observation actuelle associée à la fenêtre unitaire actuelle — 308

Génération de la signature unitaire actuelle en fonction de l'observation actuelle — 310

Génération (ou mise à jour) de la signature de référence pour cette entité informatique — 312

Calcul d'un score d'anomalie — 314

Comparaison du score d'anomalie à au moins une valeur — 316

# FIG. 3

300

Calcul distance entre la signature unitaire actuelle et la signature de référence — 402

Calcul distance moyenne — 404

Calcul d'un écart type — 406

Calcul d'un score d'anomalie — 408

# FIG. 4

400

$502_1$ - - - - - - - - - - $502_i$ - - - - - - - - - - $502_n$

504

500

**FIG. 5**

**RÉFÉRENCES CITÉES DANS LA DESCRIPTION**

**Documents brevets cités dans la description**

• US 2005125710 A

**Littérature non-brevet citée dans la description**

• Siamese Network Based Feature Learning for Improved Intrusion Détection. **JMILA HOUDA et al.** ADVANCES IN INTELLIGENT DATA ANALYSIS XIX; [LECTURE NOTES IN COMPUTER SCIENCE; LECT. NOTES COMPUTER. SPRINGER INTERNATIONAL PUBLISHING, 09 December 2019, 377-389